# EUROPÄISCHE PATENTSCHRIFT

(11) **EP 0 663 025 B1**
(45) Veröffentlichungstag und Bekanntmachung des Hinweises auf die Patenterteilung: **22.01.1997**
(21) Anmeldenummer: 93920586.0
(22) Anmeldetag: 29.09.1993
(51) Int. Cl.: D01D 5/42, D01F 8/10, C08J 5/18

(54) **FORMKÖRPER AUS POLYTETRAFLUORETHYLEN UND VERFAHREN ZU SEINER HERSTELLUNG**
MOULDED BODIES MADE OF POLYTETRAFLUOROETHYLENE AND MANUFACTURING METHOD
CORPS MOULE EN POLYTETRAFLUORETHYLENE ET PROCEDE DE FABRICATION

(30) Priorität: 30.07.1993 AT 1519/93
(43) Veröffentlichungstag der Anmeldung: 19.07.1995
(73) Patentinhaber: LENZING AKTIENGESELLSCHAFT, 4860 Lenzing (AT)
(72) Erfinder: WIMMER, Adalbert, A-4840 Vöcklabruck (AT); BACHMAIER, Josef, A-4863 Seewalchen (AT)
(74) Vertreter: Schwarz, Albin, Dr. Kopecky & Schwarz Patentanwälte
(86) Internationale Anmeldenummer: AT9300150
(87) Internationale Veröffentlichungsnummer: WO9504172

(56) Entgegenhaltungen:
- EP-A- 0 391 887
- DE-A- 1 812 700
- DE-A- 1 905 925
- DE-B- 1 660 568
- DE-B- 1 660 620

## Beschreibung

Die Erfindung betrifft einen Bikomponentenformkörper sowie ein Verfahren zur Herstellung einer Bikomponentenfolie aus PTFE. Ein solcher Formkörper beziehungsweise ein solches Verfahren ist beispielsweise aus der Druchschrift DE-B-1 660 568 bekannt. Der Formkörper aus Polytetrafluorethylen (PTFE) ist als Folie, Bändchen oder Faser ausgebildet.

PTFE ist aufgrund seiner thermischen Stabilität und seiner chemischen Inertheit ein geschätzter Werkstoff. Aus der AT-B 370.674 sind monoaxial verstreckte Folien aus gesintertem PTFE bekannt, deren Festigkeit in Verstreckungsrichtung Werte zwischen 50 N/mm² und 140 N/mm² aufweist. Diese Folien werden hergestellt, indem PTFE-Pulver zunächst zu einem zylindrischen Formkörper verpreßt wird. Anschließend wird der Formkörper gesintert, worauf Folien abgeschält, auf Temperaturen von mindestens 327°C erhitzt und verstreckt werden.

Die GB-A - 2 025 835 beschreibt die Herstellung poröser PTFE-Formkörper nach dem Pastenextrusionsverfahren, wobei eine pastenförmige Masse, welche im wesentlichen PTFE-Pulver und ein Gleitmittel enthält, durch Düsen gepreßt wird, worauf das Gleitmittel durch Trocknen entfernt wird. Danach wird der Formkörper über den Kristallitschmelzpunkt des PTFE (327°C) erhitzt und während des Erhitzens verstreckt.

Aus der AT-B 391.473 ist die Herstellung eines monoaxial verstreckten Formkörpers aus PTFE bekannt, wobei eine pastenförmige, PTFE-Pulver enthaltende Masse kontinuierlich zu einem Formling verarbeitet wird, welcher über eine Mehrzahl von Rollen bzw. Walzen geführt, erhitzt und verstreckt wird, wobei vor Aufbringen des Streckzuges der Formling auf eine Temperatur zwischen 327 und 450°C, vorzugsweise zwischen 350 und 390°C, erhitzt, dabei gesintert und sodann verstreckt wird. Dieses Verfahren gestattet die Herstellung eines monoaxial verstreckten Formkörpers aus PTFE mit Festigkeitswerten in Verstreckungsrichtung von mindestens 500 N/mm² und einer Dichte zwischen 1,80 und 2,30 g/cm³.

Um den Anwendungsbereich von PTFE zu erweitern, wäre es wünschenswert, gekräuselte Fasern aus PTFE zur Verfügung zu haben. Die Erfindung stellt sich daher die Aufgabe, PTFE-Fasern mit einer stabilen und dauerhaften Kräuselung zur Verfügung zu stellen.

Dieses Ziel wird erfindungsgemäß mit einem Bikomponentenformkörper aus Polytetrafluorethylen (PTFE) erzielt, welcher nach Art des Seite-an-Seite-Typus aus zwei PTFE-Komponenten zusammengesetzt ist, die bei Wärmeeinwirkung schrumpfen und sich in ihrem Heißluftschrumpf um mindestens 1% unterscheiden. Wird z.B. eine derartige Faser auf Temperaturen über 200°C erhitzt, so kräuselt sie sich, sofern sie während der Wärmebehandlung frei schrumpfen kann.

Es ist aus Ullman "Encyklopädie der technischen Chemie, 4. Auflage, Band 11, Seiten 283-284, Verlag Chemie, bekannt, daß Fasern aus Nylon eine Kräuselung durch Bikomponentenspinnen verliehen werden kann. Nach diesem Verfahren werden zwei Polymerschmelzen mit unterschiedlichen Eigenschaften aus einem Düsenloch zu einem Filament gesponnen. Prinzipiell sind dabei zwei Möglichkeiten der Anordnung der beiden Polymere in der Faser gegeben: eine Kern-Mantel-Anordnung und eine Seite-an-Seite-Anordnung. Bei ersterer umgibt ein Polymer das andere mantelartig, und bei letzteter bestehen die Fasern aus zwei gedachten Halbzylindern, die über ihrer Schnittflächen miteinander verbunden sind. Nach diesem Verfahren ist es allerdings nicht möglich, PTFE-Fasern mit einer stabilen Kräuselung herzustellen.

Die Erfindung beruht auf der Erkenntnis, daß eine Bikomponentenfolie, die aus zwei oder mehr PTFE-Schicbten besteht, welche sich in ihren Schrumpfeigenschaften unterscheiden, auf einfache Weise zu einer rohen Bikomponentenfaser verarbeitet werden kann, der durch Erhitzen auf eine Temperatur über 200 °C eine stabile Kräuselung verliehen werden kann.

Die DE-B-1 660 568 beschreibt ein Verfahren zur Herstellung gekräuselter Fasern, die aus zwei miteinander verbundenen, thermoplastischen Stoffen bestehen, die unterschiedliche Schrumpfeigenschaften aufweisen. Als thermoplastische Stoffe sind Polyethylen (Bsp. 2-4), Polypropylen (Bsp. 5) und ein Mischpolymer aus Methacrylat und Polyacrylnitril (Bsp. 1) genannt. Diese thermoplastischen Stoffe werden in der Schmelze bzw. bei einer Temperatur, die deren Erweichungspunkt entspricht, verarbeitet.

Zur Herstellung wird gemäß dieser Literatur zuerst eine Verbundfolie hergestellt, indem zwei Schichten verschiedener Polymere miteinander verschmolzen oder mit Hilfe von Lösungsmitteln oder Klebstoffen zusammengefügt werden. Alternativ kann nach einer anderen Ausführungsform vorgesehen sein, daß man auf die Oberfläche eines molekularorientierten Films eine Lösung oder eine Schmelze des gleichen oder eines anderen Polymers aufbringt und beides zur Verbundfolie erhärten läßt (siehe Spalte 1, Zeilen 53-63). Diese Verarbeitungsarten sind für Thermoplaste typisch.

Demgegenüber kann PTFE aufgrund seiner hohen Schmelzviskosität nicht nach den für Thermoplaste gebräuchlichen Methoden verarbeitet werden. PTFE ist nicht thermoplastisch verarbeitbar. Der Fachmann sieht aus diesem Grund PTFE auch nicht als typischen Thermoplasten an. Ein Fachmann würde somit niemals erwarten, daß der Gegenstand des vorliegenden Anspruches 1 aus PTFE überhaupt herstellbar ist, bzw. er würde nicht versuchen, die technische Lehre der DE-B-1 660 568 mit PTFE durchzuführen.

Eine bevorzugte Ausführungsform des erfindungsgemäßen Bikomponentenformkörpers ist daher als Folie, Bändchen oder Faser ausgebildet. Die Faser liegt zweckmäßigerweise fibrilliert vor.

Die Erfindung betrifft auch einen Formkörper aus PTFE, der durch Wärmebehandlung des oben genannten Bikomponentenformkörpers erhalten wird, wobei die Wärmebehandlung durch Erhitzen auf eine Temperatur von über 200°C vorgenommen wird.

Eine bevorzugte Ausführungsform des Formkörper ist dadurch gekennzeichnet, daß er als gekräuselte Faser vorliegt. Diese Faser kann auf herkömmliche Weise zu einem Nadelfilz verarbeitet werden, der ausschließlich aus PTFE besteht. Die gekräuselte PTFE-Faser besitzt Festigkeitswerte von mindestens 300 N/mm².

Es hat sich gezeigt, daß die Kardiereigenschaften der erfindungsgemäßen Fasern insbesondere dann gut sind und die Fasern für die Bildung von Vliesen und Filzen ganz besonders gut geeignet sind, wenn Fasern verwendet werden, die gekräuselt und fibrilliert sind. Mit diesen durch die Fibrillierung verästelten Fasern kann ohne Verwendung von Hilfsmitteln ein reiner PTFE-Filz hergestellt werden. Dies ist von großem Vorteil, da diese Filze bei Verwendung als Filter eine geringere Zunahme der Druckdifferenz aufweisen als Filze aus matrixgesponnenen Fasern. Die erfindungsgemäßen Filze können in der Medizintechnik gut verwendet werden.

Die Erfindung betrifft weiters ein Verfahren zur Herstellung einer Bikomponentenfolie aus PTFE, das darin besteht, daß zwei PTFE-Pulver enthaltende Massen zu einem Formling des Seite-an-Seite-Typus verarbeitet werden, der zu einem flächigen Bikomponentenformkörper ausgewalzt wird, welcher gesintert und anschließend verstreckt wird, mit der Maßgabe, daß PTFE-Pulver eingesetzt werden, die, verarbeitet zu einer Folie, bei Wärmeeinwirkung verschieden stark schrumpfen und sich in ihrem Heißluftschrumpf um mindestens 1% unterscheiden. Es ist auch denkbar, mehr als zwei PTFE-Pulver enthaltende Massen zu einem Formling des Seite-an-Seite Typus zu verarbeiten.

Eine bevorzugte Abwandlung des erfindungsgemäßen Verfahrens besteht darin, daß der flächige Bikomponentenformkörper zu Bändchen geschnitten wird, welche gesintert, anschließend verstreckt und gegebenenfalls einer Fibrillierungsbehandlung unterzogen werden.

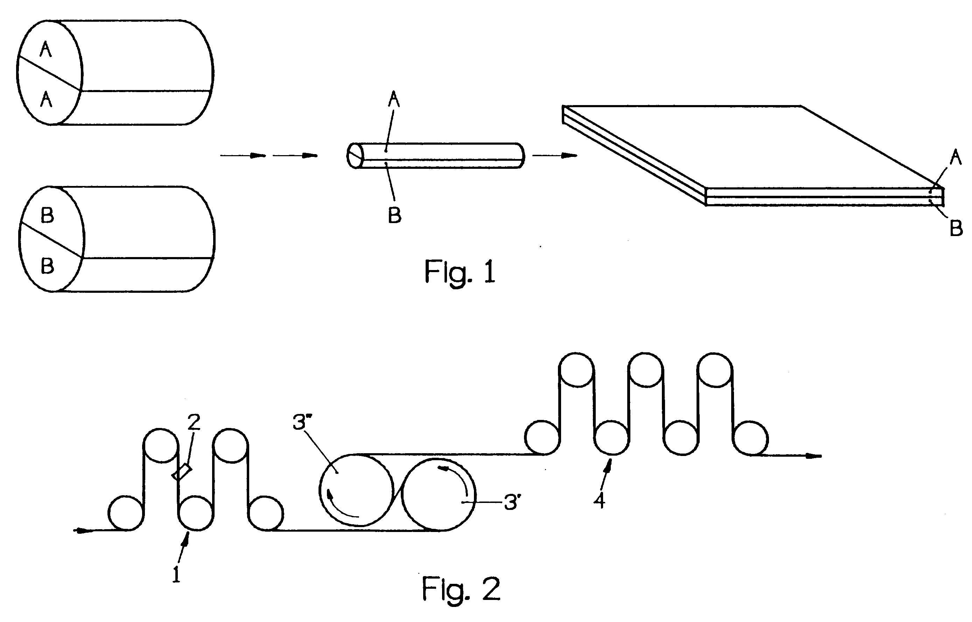

An Hand der beigefügten Zeichnung wird die Erfindung näher erläutert. Figur 1 zeigt schematisch Bildung und Aufbau eines flächigen Bikomponentenformkörpers des Seite-an-Seite-Typus, und Figur 2 zeigt schematisch die Herstellung einer Kräuselfaser aus PTFE.

Gemäß Fig. 1 werden zunächst zwei PTFE-Polymere A und B, die sich im Heißluftschrumpf unterscheiden, mit Gleitmittel vermischt und zu den Preßlingen (Zylindern) verformt. Diese Zylinder werden anschließend jeweils der Länge nach axial in zwei Hälften geteilt und je eine Hälfte A und B gemeinsam in eine Strangpresse eingesetzt und zu einer Schnur verpreßt. Die Schnur besteht somit zur einen Hälfte aus dem PTFE A und zur anderen Hälfte aus dem PTFE B. Diese Schnur wird dann im nächsten Schritt durch einen Kalander geführt und zu einer Folie ausgewalzt. Es ist dabei darauf zu achten, daß die Schnur so zwischen die Walzen einläuft, daß die gedachte Trennlinie der beiden Materialhälften parallel zum Walzenspalt liegt. Nur so ist gewährleistet, daß tatsächlich eine Bikomponentenfolie entsteht. Im Anschluß an die Kalandrierung wird die Folie wie üblich getrocknet und damit vom Gleitmittel befreit.

Die getrocknete Folie wird nun kontinuierlich der in der Fig. 2 schematisch dargestellten Sinter- und Streckanlage vorgelegt. Sie besteht im wesentlichen aus einem Lieferorgan 1, einem Klingenbalken 2, zwei beheizten Walzen 3', 3" und einem unbeheizten Abzugsorgan 4, wobei die Pfeile in der Zeichnung die Drehrichtung der beheizten Walzen 3', 3" und die Abzugsrichtung der Folie symbolisieren.

Zur Herstellung von Bändchen und Fasern wird die getrocknete Folie vorteilhaft bereits beim Durchlaufen durch das Lieferorgan 1 mit dem Klingenbalken 2 geschnitten.

Die dem Lieferorgan 1 übertragene Folie wird kontinuierlich vom Klingenbalken 2 in Bändchen geschnitten, welche weiter über die beheizten Walzen 3', 3" geführt und auf diesen gesintert werden. Die Bändchen werden dazu vorzugsweise in "S"-Form um die Walzen gelegt, um sie von beiden Seiten zu durchwärmen. Die Walzen sind auf eine Temperatur von mindestens 327°C erhitzt. Unmittelbar nach dem Sinterprozeß erfolgt die Verstreckung. Abgezogen wird mit dem nicht beheizten Abzugsorgan 4, das in der Figur 2 mehrspulig dargestellt ist. Zur Erzeugung von Fasern werden die Bändchen anschließend über eine Nadelwalze geführt und fibrilliert. Um nun noch die Kräuselung zu aktivieren wird die Faser ohne Belastung auf eine Temperatur von mindestens 200°C erhitzt, d.h., frei geschrumpft.

Mit den nachfolgenden Beispielen wird die Erfindung noch näher erläutert.

### Beispiel 1

PTFE-Pulver der Typen "Algoflon" DF 200 (Hersteller: Ausimont S.p.A.) mit einem Heißluftschrumpf von 4,5 % und "Teflon" 3579 (Hersteller Dupont) mit einem Heißluftschrumpf von 3,0 % werden getrennt mit je 20 % Gleitmittel mit einem Siedebereich zwischen 186 und 214°C versetzt und getrennt zu Zylindern verpreßt. Diese Zylinder werden anschließend in axialer Richtung, genau in der Mitte, getrennt. Je eine Hälfte der beiden verschiedenen Polymere wird dann in den Hauptpreßzylinder eingesetzt und zu einer runden Schnur verpreßt. Diese Schnur wird anschließend mittels eines 2-Walzen-Kalanders in der Art zu einer 0,1 mm dicken Folie ausgewalzt, daß die Folie auf ihrer gesamten Breite zur einen Hälfte der Dicke aus "Algoflon" DF 200 und zur anderen Hälfte aus "Teflon" 3579 besteht. Die Folie wird getrocknet, bei einer Temperatur von 380°C gesintert und bei dieser Temperatur in einem Verhältnis von 1:11 verstreckt. Die dabei erhaltene Folie besitzt eine Dicke von 20 µm und wird mittels Fibrillierwalzen zu Filamenten aufgespalten und mit einer Schneidmaschine zu einer Stapelfaser mit einer Länge von 80 mm geschnitten. Die erhaltene Stapelfaser wird weiters bei einer Temperatur von 250°C 30 min im Ofen getempert. Dabei schrumpfen die beiden PTFE-Polymere unterschiedlich, und es entsteht eine Einkräuselung von 45 %. Die Festigkeit dieser Faser beträgt 495 N/mm² bei einer Dehnung von 8 %.

### Beispiel 2

Eine Folie mit einer Dicke von 50 µm wird, wie in Beispiel 1 beschrieben hergestellt, verstreckt und anschließend fibrilliert. Das Streckverhältnis beträgt 1:12 und die erhaltene Foliendicke ist 9,5 µm. Die Schrumpfung und Einkräuselung erfolgt bei einer Temperatur von 300°C. Die erhaltene Einkräuselung beträgt 65 %, die Festigkeit beträgt 530 N/mm² bei einer Dehnung von 6,5 %.

### Beispiel 3

Gemäß Beispiel 1 werden "Teflon" 3579 und "Polyflon" 104 UF (Hersteller: Daikin) mit einem Heißluftschrumpf von 5,5 % mit Gleitmittel vermischt und zu einer Folie mit einer Dicke von 75 µm verformt. Die Verstreckung erfolgt bei einer Temperatur von 365°C und einem Verhältnis von 1:10. Die erhaltene 15 µm dicke Folie wird dann fibrilliert und in einem auf 300°C erhitzten Schacht geschrumpft und damit gekräuselt. Nach der so erfolgten Kräuselung wird der Strang zur Faser geschnitten. Die Einkräuselung beträgt 60 %. Die Festigkeit beträgt 427 N/mm² bei einer Dehnung von 9 %.

### Beispiel 4

PTFE-Pulver wird gemäß Beispiel 3 gemischt und anschließend zu einem Zylinder verpreßt, indem die Preßform zur einen Hälfte mit dem einen und zur anderen Hälfte mit dem anderen Pulver in gleicher Menge gefüllt wird. Der auf diese Weise hergestellte zweikomponentige Zylinder wird in der in Beispiel 3 beschriebenen Weise zur Faser verarbeitet. Die Schrumpfung erfolgt bei 310°C, die Einkräuselung beträgt 62 %. Die Festigkeit der Kräuselfaser beträgt 405 N/mm² bei einer Dehnung von 10 %.

### Beispiel 5

Wie im Beispiel 4 beschrieben werden "Algoflon" DF 200 und "Hostaflon" TF 2029 (Hersteller: Hoechst), welches letztere einen Heißluftschrumpf von 2,5% besitzt, gemeinsam in die Form gefüllt, zur Schnur verpreßt, weiter zur Folie verformt und unter den im Beispiel 1 beschriebenen Bedingungen verstreckt, fibrilliert und thermisch geschrumpft. Die Festigkeit der erhaltenen Faser beträgt 480 N/mm² bei einer Dehnung von 8%; die Einkräuselung beträgt 50%.

## Patentansprüche

1. Bikomponentenformkörper, dadurch gekennzeichnet, daß er nach Art des Seite-an-Seite-Typus aus zwei Polytetrafluorethylen--(PTFE)-Komponenten (A, B) zusammengesetzt ist, die bei Wärmeeinwirkung schrumpfen und sich in ihrem Heißluftschrumpf um mindestens 1% unterscheiden.

2. Bikomponentenformkörper nach Anspruch 1, dadurch gekennzeichnet, daß er als Folie, Bändchen oder Faser ausgebildet ist.

3. Bikomponentenformkörper nach Anspruch 2, ausgebildet als Faser, dadurch gekennzeichnet, daß die Faser fibrilliert ist.

4. Formkörper aus PTFE, erhältlich durch Erhitzen eines Bikomponentenformkörpers nach einem der Ansprüche 1, 2 oder 3 auf eine Temperatur von über 200°C.

5. Formkörper nach Anspruch 4, dadurch gekennzeichnet, daß er als gekräuselte Faser vorliegt.

6. Nadelfilz aus PTFE, dadurch gekennzeichnet, daß er aus gekräuselten PTFE-Fasern nach Anspruch 5 besteht.

7. Verfahren zur Herstellung einer Bikomponentenfolie aus PTFE, dadurch gekennzeichnet, daß zwei PTFE-Pulver enthaltende Massen zu einem Formling des Seite-an-Seite-Typus verarbeitet werden, der zu einem flächigen Bikomponentenformkörper ausgewalzt wird, welcher gesintert und anschließend verstreckt wird, mit der Maßgabe, daß PTFE-Pulver eingesetzt werden, die, verarbeitet zu einer Folie, bei Wärmeeinwirkung verschieden stark schrumpfen und sich in ihrem Heißluftschrumpf um mindestens 1% unterscheiden.

8. Verfahren nach Anspruch 7 zur Herstellung einer Bikomponentenfaser nach Anspruch 2, dadurch gekennzeichet, daß der flächige Bikomponentenformkörper zu Bändchen geschnitten wird, welche gesintert, anschließend verstreckt und gegebenenfalls einer Fibrillierungsbehandlung unterzogen werden.

## Claims

1. Two-component moulded body, characterized in that it is formed as a side-by-side structure from two polytetrafluoroethylene (PTFE) components (A, B) which shrink on exposure to heat and differ in their hot-air shrinkage by at least 1%.

2. Two-component moulded body according to Claim 1, characterized in that it is formed as sheet, strip or fibre.

3. Two-component moulded body according to Claim 2, formed as fibre, characterized in that the fibre is fibrillated.

4. PTFE moulded body, obtainable by heating a two-component moulded body according to one of Claims 1, 2 or 3 to a temperature of over 200°C.

5. Moulded body according to Claim 4, characterized in that it is in the form of crimped fibre.

6. PTFE needle-punched felt, characterized in that it is composed of crimped PTFE fibres according to Claim 5.

7. Method of producing a PTFE two-component sheet, characterized in that two compounds containing PTFE powder are processed to form a moulding of the side-by-side type which is rolled out to form a sheet-shaped two-component moulded body which is sintered and then stretched, with the proviso that PTFE powders are used which, when processed to form a sheet, shrink considerably to different extents when exposed to heat and differ in their hot-air shrinkage by at least 1%.

8. Method according to Claim 7 of producing a two-component fibre according to Claim 2, characterized in that the sheet-shaped two-component moulded body is cut into strips which are sintered, then stretched and optionally subjected to a fibrillation treatment.

## Revendications

1. Corps moulé biconstituant, caractérisé en ce qu'il est constitué selon la technique du type côte à côte de deux constituants (A, B) de polytétrafluoroéthylène (PTFE), qui se contractent sous l'effet de la chaleur et qui se différencient dans leur retrait à l'air chaud d'au moins 1 %.

2. Corps moulé biconstituant selon la revendication 1, caractérisé en ce qu'il est formé comme une feuille, une bandelette ou une fibre.

3. Corps moulé biconstituant selon la revendication 2, formé comme une fibre, caractérisé en ce que la fibre est fibrillée.

4. Corps moulé constitué de PTFE, disponible par chauffage d'un corps moulé biconstituant selon l'une quelconque des revendications 1, 2 ou 3 à une température supérieure à 200°C.

5. Corps moulé selon la revendication 4, caractérisé en ce qu'il est présent en tant que fibre frisée.

6. Feutre tissé constitué de PTFE, caractérisé en ce qu'il est constitué de fibres de PTFE frisées selon la revendication 5.

7. Procédé pour la préparation d'une feuille biconstituant constituée de PTFE, caractérisé en ce qu'on travaille deux masses contenant des poudres de PTFE en une briquette du type côte à côte, qui est laminée en un corps moulé biconstituant plan, lequel est fritté et ensuite étiré, avec la condition qu'on utilise des poudres de PTFE qui travaillées en une feuille se contractent de manière fortement différente sous l'effet de la chaleur et se différencient dans leur retrait à l'air chaud d'au moins 1 %.

8. Procédé selon la revendication 7 pour la préparation d'une fibre biconstituant selon la revendication 2, caractérisé en ce que le corps moulé biconstituant plan est coupé en bandelettes, lesquelles sont frittées, ensuite étirées et éventuellement soumises à un traitement de fibrillation.
